# EUROPEAN PATENT SPECIFICATION

(11) **EP 2 740 132 B1**
(45) Date of publication and mention of the grant of the patent: **12.07.2017**
(21) Application number: 11770531.9
(22) Date of filing: 01.08.2011
(51) Int. Cl.: H01F 29/02, G05F 1/14

(54) **AN IMPROVED, HIGH-EFFICIENCY, ENERGY-SAVING DEVICE FOR INSERTING BETWEEN A POWER SOURCE AND A MOTIVE AND/OR LIGHTING POWER LOAD**
VERBESSERTER HOCHEFFIZIENTE ENERGIESPARENDE VORRICHTUNG ZUM EINSETZEN ZWISCHEN EINER ENERGIEQUELLE UND EINER MOTORISCHEN UND/ODER BELEUCHTUNGSLAST
DISPOSITIF AMÉLIORÉ PERMETTANT D'ÉCONOMISER L'ÉNERGIE À HAUTE PERFORMANCE DESTINÉ À ÊTRE INSÉRÉ ENTRE UN BLOC D'ALIMENTATION ET UNE CHARGE MOBILE ET/OU À POUVOIR ÉCLAIRANT

(43) Date of publication of application: 11.06.2014
(73) Proprietor: Energia Europa S.P.A., 36010 Zane' (VI) (IT)
(72) Inventor: D'ANTUONO, Ernesto, I-36033 Isola Vicentina (VI) (IT)
(74) Representative: Bonini, Ercole
(86) International application number: PCT/IT2011/000275
(87) International publication number: WO 2013/018108

(56) References cited:
- WO-A1-97/05536
- WO-A1-2007/037609
- DE-C- 599 318
- JP-A- 9 312 223
- JP-A- 10 079 315
- JAWAD FAIZ ET AL: "New Solid-State Onload Tap-Changers Topology for Distribution Transformers", IEEE TRANSACTIONS ON POWER DELIVERY, IEEE SERVICE CENTER, NEW YORK, NY, US, vol. 18, no. 1, 1 January 2003 (2003-01-01), XP011078911, ISSN: 0885-8977

## Description

This invention concerns an energy-saving device capable of reducing the energy consumption determined during the supply of electrical energy from a power source to a load.

It is common knowledge that it is necessary to transform the values of the electrical energy supplied by the mains power supply network in order to suitably power one or more loads consuming motive and/or lighting power.

To achieve said transformation it is consequently necessary to insert a static electrical machine between the power source and the loads to supply that is capable of converting the values of the input electrical quantities, i.e. the input voltage Vᵢ and the input current Iᵢ, into suitable output values Vₒ and Iₒ.

Such machine is known by the name of power transformer.

It is also common knowledge that a transformer generally incurs energy losses due to various factors, such as the loss in potential due to the Joule effect in the windings, or the losses due to dispersion of the flows.

These unwanted losses coincide with a high energy consumption during the operation of a transformer and a consequently reduced efficiency.

The above-mentioned disadvantages are greater, the higher the power of the electrical energy being controlled.

For this reason, energy-saving devices have been proposed on the market for inserting and enabling between a three-phase power source and one or more three-phase loads in order to attenuate the above-described drawbacks.

In particular, the International Application WO2007/037609 describes an automatic power saving apparatus using a PLC, as well as the Japanese Application JP9312223 describes a power saving apparatus having a transformer which is never open and hence does not break a contactless switch even at a low load state with a current below the min. load current which will not perfectly turn on this switch.

Moreover, the Japanese Application JP10079315 describes a power saving device which is capable of preventing the primary winding wire of a transformer from being tap-changed due to a temporal drop in an input voltage so as to restrain lighting from flickering and has an enough power-saving effect on the transformer.

Even using such devices, however, it is still impossible to obtain the desirable optimal energy saving.

The present invention aims to overcome the aforesaid drawbacks.

In particular, the main object of the invention is to produce an energy-saving device that is more efficient than the devices according to the known state of the art.

Another object of the present invention is to produce an energy-saving device capable of attenuating the harmonics contained in the signals of the electrical quantities involved.

A further object of the present invention is to produce an energy-saving device capable of attenuating the distortions coming from the power supply network. Another object of the invention is to produce an energy-saving device capable of attenuating the inrush current peaks when the transformer starts up, with a balancing of the energy transmission.

Another object of the invention is to produce an energy-saving device capable of attenuating the current peaks in the waveforms at the rated frequency.

A further, not necessarily last, object of the invention is to produce an energy-saving device capable of optimising the regulation of the energy transmission. The aforesaid objects are achieved by the energy-saving device according to the invention, the characteristics of which are described in the main claim.

The fact that the energy-saving device according to the invention, in the preferred embodiments described in detail below, advantageously involves first and second switching means, enables the passage from a configuration in which said device is enabled to another configuration in which it is disabled without giving rise to anomalous transient operating conditions that could damage the device.

Further characteristics of the energy-saving device according to the invention are described in the dependent claims.

The above-mentioned objects and advantages are further illustrated in a description of several preferred embodiments of the invention given below as non-limiting examples with reference to the attached drawings, wherein:
- fig. 1 schematically represents the electrical configuration of the energy-saving device according to the invention;
- fig. 2 schematically represents the feedback control that is established during the use of the energy-saving device according to the invention;
- fig. 3 schematically represents a first embodiment of a single transformation assembly belonging to the three-phase transformer of the energy-saving device that does not form part of the invention;
- fig. 4 schematically represents a second embodiment of a single transformation assembly belonging to the three-phase transformer of the energy-saving device that does not form part of the invention;
- fig. 5 schematically represents a third embodiment of a single transformation assembly belonging to the three-phase transformer of the energy-saving device that does not form part of the invention;
- fig. 6 schematically represents a fourth embodiment of a single transformation assembly belonging to the three-phase transformer of the energy-saving device that does not form part of the invention;
- fig. 7 schematically represents a fifth embodiment of a single transformation assembly belonging to the three-phase transformer of the energy-saving device that does not form part of the invention;
- fig. 8 schematically represents a sixth embodiment of a single transformation assembly belonging to the three-phase transformer of the energy-saving device that does not form part of the invention;
- fig. 9 schematically represents the insertion and usage of the energy-saving device according to the invention between a power source and a load being powered;
- fig. 10 shows two graphs enabling a comparison of the energy consumption at a commercial complex respectively using (in the "saving" configuration) or not using (in the bypass configuration) the energy-saving device according to the invention.

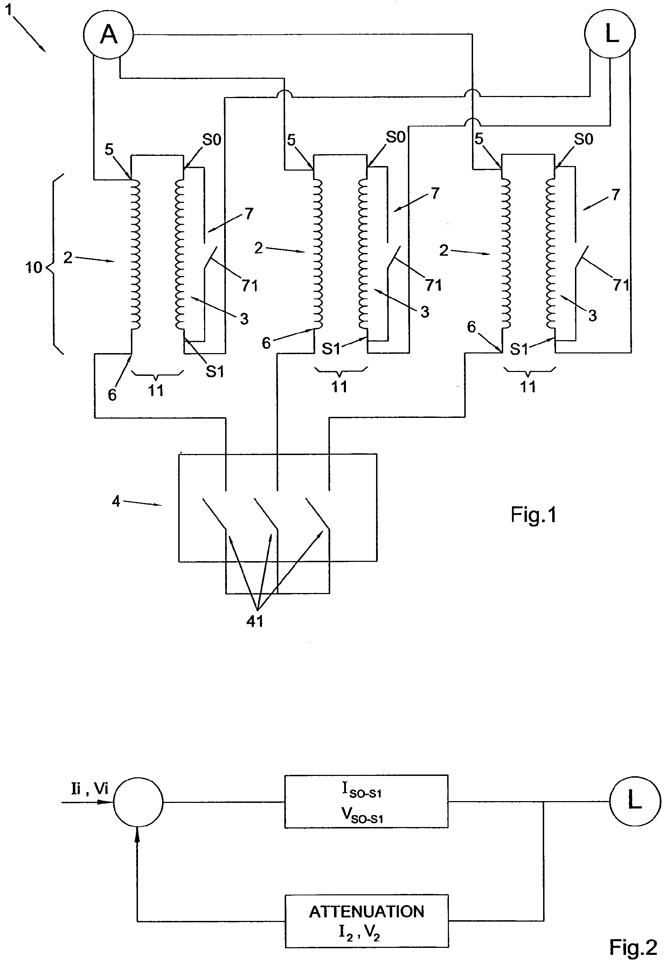

The energy-saving device according to the invention is globally illustrated in fig. 1, where it is indicated by the numeral **1**.

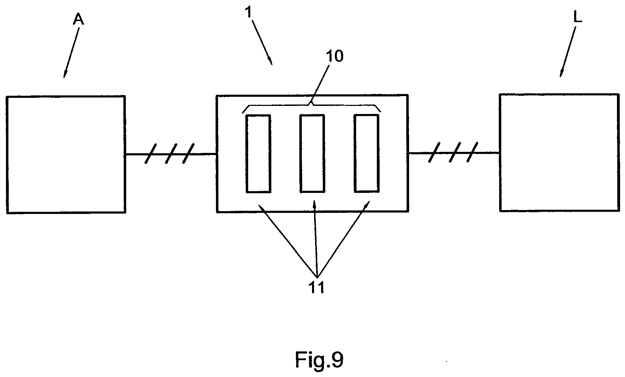

As shown in the diagram in fig. 9, the energy-saving device according to the invention is designed to be inserted between a three-phase power source **A** (such as a three-phase mains power supply) and one or more three-phase loads **L**, which may be of the motive and/or lighting power type.

In particular, the energy-saving device **1** according to the invention comprises a three-phase transformer **10**, wherein each phase - called the transformation assembly **11 -** comprises a primary winding **2** electromagnetically coupled to a secondary winding **3**.

As shown in fig. 1, each transformation assembly **11** of the three-phase transformer **10** involves a first end **5** of the primary winding **2** being connected to one phase of the power source **A**, while the second end **S1** of the secondary winding **3** is connected to one of the phases of the three-phase load **L**.

According to the invention, the first end **5** of each primary winding **2** is shortcircuited to the first end **S0** of the corresponding secondary winding **3** so as to define a common reference for said two windings **2** and **3**.

Again as shown in fig. 1, the second ends **6** of the primary windings **2** of each transformation assembly **11** have a common connection by means of first switching means **4**, which enable the enabling or disabling of the energy-saving device **1** inserted between the power source **A** and the load **L** to be powered.

The presence of said first switching means **4** thus enables the energy-saving device **1** according to the invention to be switched from a condition in which it is enabled (called the "saving" configuration in technical jargon) to a condition in which said energy-saving device **1** is disabled and bypassed, and consequently in the so-called "bypass" configuration.

Said first switching means **4** may preferably, but not necessarily, comprise a remote control switch **41** with three contacts, each of which is associated with a transformation assembly **11** of said three-phase transformer **10**.

To be able to switch safely from the saving configuration to the bypass configuration, and vice versa, without incurring in transient operating conditions of the energy-saving device **1** that could interfere with its performance or even cause damage, said device **1** according to the invention comprises second switching means **7** that are placed in parallel with each secondary winding **3** of each transformation assembly **11**, as shown in fig. 1.

Said second switching means **7** may preferably, but not necessarily, comprise an isolator **71** with three contacts, each of which is placed in parallel with a corresponding secondary winding 3 of each transformation assembly **11**.

It is consequently possible to switch from the saving configuration to the bypass configuration, and vice versa, in total safety and without giving rise to anomalous transient operating conditions of the energy-saving device **1** according to the invention.

In particular, when the energy-saving device **1** is operating in the saving configuration, the first switching means **4** are in the "on" condition, i.e. they close the contact between the second ends **6** of the three primary windings **2**, while the second switching means **7** are in the "off", i.e. open, condition and consequently all of the current induced by each primary winding **2** flows through the corresponding secondary winding **3**.

Thus, in order to switch to the bypass configuration of the energy-saving device **1** according to the invention, the first step to take is to switch the first switching means **4** to the "off" condition, and thereby open the contact, and only subsequently to switch the second switching means **7** to the "on" condition, thereby short-circuiting each secondary winding **3**.

Then to return from the bypass configuration to the saving configuration of the energy-saving device **1** according to the invention, it is necessary to proceed first to switch said second switching means **7** to the "off" condition, i.e. their contact is opened, and only subsequently to switch the first switching means **4** to the "on" condition, i.e. by restoring the common connection between the second ends **6** of the three primary windings **2**.

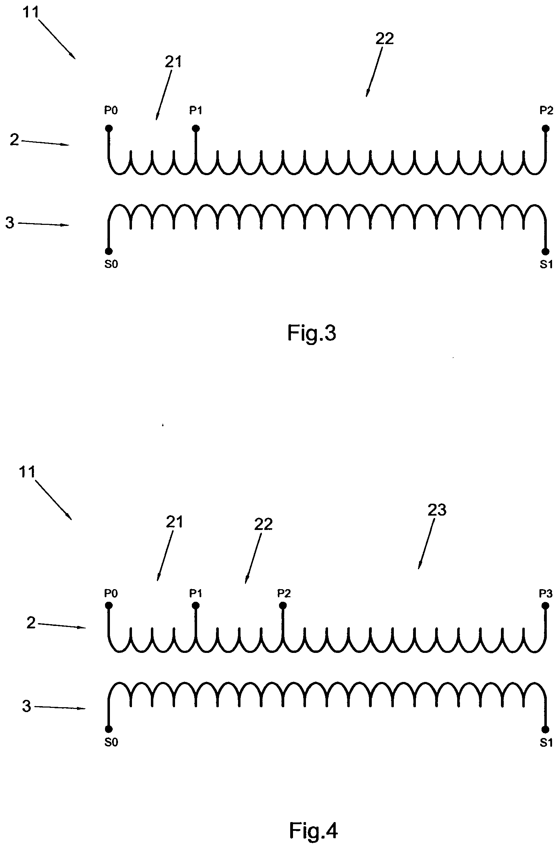

Hereinafter six embodiments of an energy-saving device 1 will be described. Such embodiments do not form part of the invention but they represent background art that is useful for understanding the invention. In a first embodiment of an energy-saving device **1** that does not form part of the invention, as shown in fig. 3, the primary winding **2** of each transformation assembly **11** comprises two portions of winding **21** and **22** electrically connected in series.

In said embodiment in particular, there is a principal portion **21** extending between a first point **P0** (that in this case coincides with the first end **5**) and a second point **P1** of the primary winding **2**, while the second portion of winding **22** extends from said second point **P1** to a third point identified in fig. 3 as **P2**, which coincides with the second end **6**.

Again according to such a first embodiment that does not form part of the invention, each pair comprising the primary **2** and secondary **3** windings of the energy-saving device **1** is dimensioned so that the value of the voltage **V_{P0-P2}** established between the first point **P0** and the third point **P2** of the primary winding **2 -** and therefore, in
this embodiment, the voltage value established on the whole primary winding **2** - is in the range defined by the voltage **Vₖᵥₚ** applied to the principal portion **21** multiplied by the coefficients 1.2043 - 2% and 1.2043 + 2%.

In particular, the value established for the voltage **V_{P0-P2}** is preferably, but not necessarily, the result of **Vₖᵥₚ** multiplied by the coefficient 1.2043. Moreover, the dimensioning of each transformation assembly **11** must be such that the value of the voltage **V_{S0-S1}** between the first end **S0** and the second end **S1** of the secondary winding **3** is in the range defined by said voltage **Vₖᵥₚ** multiplied by the coefficients 0.1021 - 5% and 0.1021 + 5%.

Here again, the value of **V_{S0-S1}** is preferably, but not necessarily, obtained by multiplying the voltage **Vₖᵥₚ** by the coefficient 0.1021.

To adequately dimension both the primary winding **2** and the secondary winding **3** of each transformation assembly **11** in the energy-saving device **1,** the value of the current **I_{P0-P1}** that flows through the main portion **21** of the primary winding **2** must also be defined.

In particular, said current value **I_{P0-P1}** is in the range defined by the current **Iₖₐₛ** flowing in the secondary winding **3** multiplied by the coefficients 0.1133 - 5% and 0.1133 + 5%.

The value of the current **I_{P0-P1}** is preferably, but not necessarily, the current **Iₖₐₛ** multiplied by the coefficient 0.1133.

Likewise, the value of the current **I_{P1-P2}** flowing in the second portion **22** shall be in the range defined by said current **Iₖₐₛ** multiplied by the coefficients 0.0940 - 5% and 0.0940 + 5%.

More precisely, the value of the current **I_{P1-P2}** is the current **Iₖₐₛ** multiplied by the coefficient 0.0940.

Finally, each transformation assembly **11** forming part of the energy-saving device **1** according to such a first embodiment that does not form part of the invention is dimensioned so that the value of the magnetic induction relating to the configuration defined by the primary winding **2**, delimited between the first point **P0** and the third point **P2**, and by the secondary winding **3** is in the range defined by the coefficient of magnetic induction **Cₖᵢₘ** relating to the configuration comprising the principal portion **21** of said primary winding **2** and secondary winding **3**, multiplied by the coefficients 0.9965 - 0.03% and 0.9965 + 0.03%.

Said value of the magnetic induction is preferably, but not necessarily, the coefficient of magnetic induction **Cₖᵢₘ** multiplied by the coefficient 0.9965.

A second embodiment of the energy-saving device **1** that does not form part of the invention involves each transformation assembly **11** having a further portion **23** added to the primary winding **2**, as shown in fig. 4, by comparison with said first embodiment in fig. 3, extending from the third point **P2** up to a fourth point **P3**, that in this case coincides with the second end **6**.

Here again, said portion **23** is dimensioned so that the value of the voltage **V_{P0-P3}** established between the first point **P0** and the fourth point **P3** of the primary winding **2** is in the range defined by said voltage **Vₖᵥₚ** multiplied by the coefficients 1.5149 - 2% and 1.5149 + 2%.

More precisely, said embodiment involves the voltage value **V_{P0-P3}** to obtain being the result of the voltage **Vₖᵥₚ** multiplied by the coefficient 1.5149.

The value of the current **I_{P2-P3}** flowing through said third portion **23** is in the range defined by the current **Iₖₐₛ** multiplied by the coefficients 0.0748 - 5% and 0.0748 + 5%.

Said current value **I_{P2-P3}** flowing through said third portion **23** is preferably, but not necessarily, **Iₖₐₛ** multiplied by 0.0748.

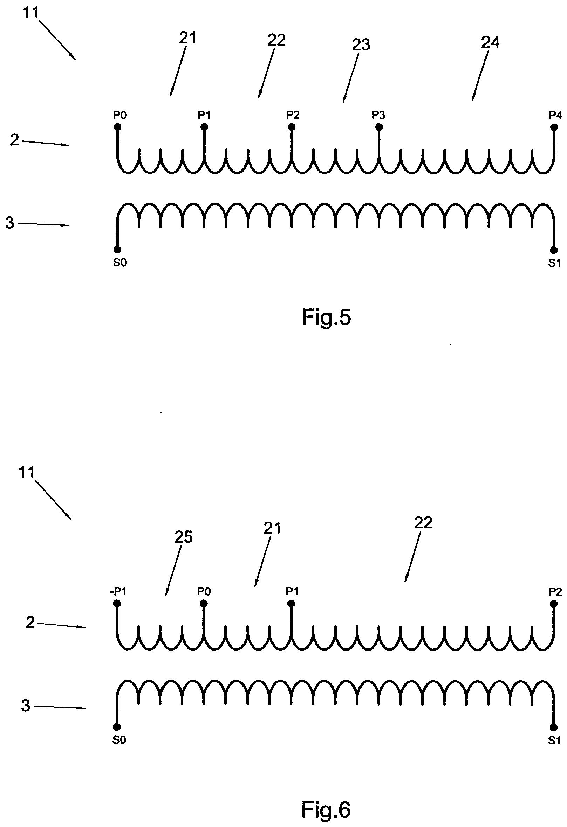

A third embodiment of the energy-saving device **1** that does not form part of the invention involves each transformation assembly **11** differing, as illustrated in fig. 5, from that of the above-described second embodiment in that a fourth portion **24** is added to the primary winding **2**, extending from the fourth point **P3** to a fifth point **P4**, that in this case coincides with the second end **6**.

Here again, said fourth portion **24** is dimensioned so that the value of the voltage **V_{P0-P4}** established between the first point **P0** and said fifth point **P4** of the primary winding **2** is in the range defined by the voltage **Vₖᵥₚ** multiplied by the coefficients 2.0851 - 2% and 2.0851 + 2%.

More precisely, said voltage value **V_{P0-P4}** coincides with the voltage **Vₖᵥₚ** multiplied by the coefficient 2.0851.

In addition, the dimensioning of said fourth portion **24** is such that the value of the current **I_{P3-P4}** flowing through said portion is in the range defined by the current **Iₖₐₛ** multiplied by the coefficients 0.0543 - 5% and 0.0543 + 5%.

Here again, said current **I_{P3-P4}** is preferably, but not necessarily, the product of **Iₖₐₛ** multiplied by 0.0543.

Figs. 6 to 8 respectively illustrate a fourth, fifth and sixth type of transformation assembly **11** belonging to further different embodiments of the energy-saving device **1** that do not form part of the invention.

Generally speaking, all these three further embodiments have a characteristic in common, i.e. the fact that the primary winding **2** comprises a so-called safety portion **25** extending from the first point **P0** up to a sixth point defined as **-P1**, that in this case coincides with the above-mentioned first end **5**.

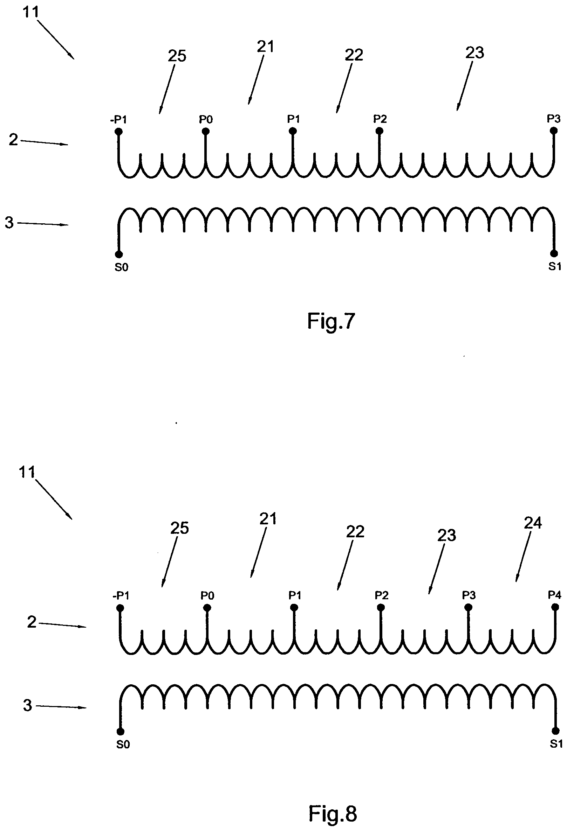

In detail, as shown in fig. 6, the fourth embodiment is simply the first embodiment shown in fig. 3 with the addition of the safety portion **25**, and the fifth embodiment coincides with the second embodiment of the transformation assembly **11**, shown in fig. 4, with the addition of said safety portion **25**, as shown in fig. 7.

Said safety portion **25** is what also distinguishes the sixth embodiment of each transformation assembly **11**, shown in fig. 8, forming part of the energy-saving device **1**, from the type of transformation assembly **11** shown in fig. 5.

In all three cases of figs. 6, 7 and 8, said safety portion **25** is dimensioned so that the value of the voltage **V-_{P1-P0}** established between the sixth point **-P1** and the first point **P0** of the primary winding 2 is in the range defined by the voltage **Vₖᵥₚ** multiplied by the coefficients 0.6383 - 2% and 0.6383 + 2%; in particular, said voltage **V-_{P1-P0}** acquires the voltage value of **Vₖᵥₚ** multiplied by 0.6383. Moreover, said dimensioning enables a current **I_{-P1-P0}** flowing through the safety portion **25** to be obtained in the range defined by said current **Iₖₐₛ** multiplied by the coefficients 0.0691 - 5% and 0.0691 + 5%.

Here again, the current value **I**_{-**P1-P0**} flowing through the safety portion **25** is preferably, but not necessarily, the current **Iₖₐₛ** multiplied by the coefficient 0.0691.

As for the methods with which the various elements of each transformation assembly **11** forming part of the various above-described energy-saving devices **1** that do not form part of the invention are dimensioned in order to obtain the voltage and current values required, these include choosing a suitable number of turns on the two windings **2** and **3** of each transformation assembly **11**, and/or choosing a suitable cross-section for the conductor used to make said primary and secondary windings **2** and **3**, and/or choosing the type and size of the ferromagnetic material on which said primary **2** and secondary **3** windings are wound.

As concerns the value of the voltage **Vₖᵥₚ** taken as a reference for the dimensioning of the various elements in each transformation assembly **11** for the various embodiments of the energy-saving device **1** that do not form part of the invention, this may preferably, but not necessarily coincide with the rated voltage of the mains power supply network.

It is nonetheless possible, in different embodiments of the energy-saving device **1** that do not form part of the invention, to have a value of the voltage **Vₖᵥₚ** differing from the voltage of the mains power supply network.

Likewise, for the coefficient of magnetic induction **Cₖᵢₘ,** this comes preferably, but not necessarily, in the range of 0.9 to 1.5 Tesla.

Here again, however, in different embodiments of the energy-saving device that do not form part of the invention, the value **Cₖᵢₘ** may differ from said range of 0.9 to 1.5 Tesla.

As for the current **Iₖₐₛ,** this obviously depends on the load connected to each secondary winding **3** on each transformation assembly **11** forming part of the energy-saving device **1**.

It is important to note that the objects described above are achieved by all the previously-described configurations of the energy-saving device **1**, in that they advantageously enable a system of feedback control on the energy characteristics, and the harmonics in particular, contained in the signals, i.e. **Vᵢ** and **Iᵢ**, supplied as input to said device **1** that does not form part of the invention.

In particular, it is possible to obtain a deamplification system designed to attenuate the non-functional energy characteristics of the input energy quantities **Vᵢ** and **Iᵢ** that interfere with the efficiency of the energy-saving device **1** and of the load **L**.

In detail, from the functional standpoint, as shown in the diagram in fig. 2, the currents **I₂** that flow in the secondary winding **3** of each transformation assembly **11**, induce a counter current on each primary winding **2** as a result of magnetic induction that contrasts and reduces the above-mentioned non-functional energy characteristics, and the harmonics in particular, of the input energy quantities **Vᵢ** and **Iᵢ** in the primary winding **2**.

It is therefore possible to achieve a system for the transformation and supply of electrical energy to a load **L** that enables output electrical quantities to be obtained with more limited non-functional electrical characteristics (harmonics) and that operates in a smoother and slower steady state both during the inrush phases and when operating at the rated frequency.

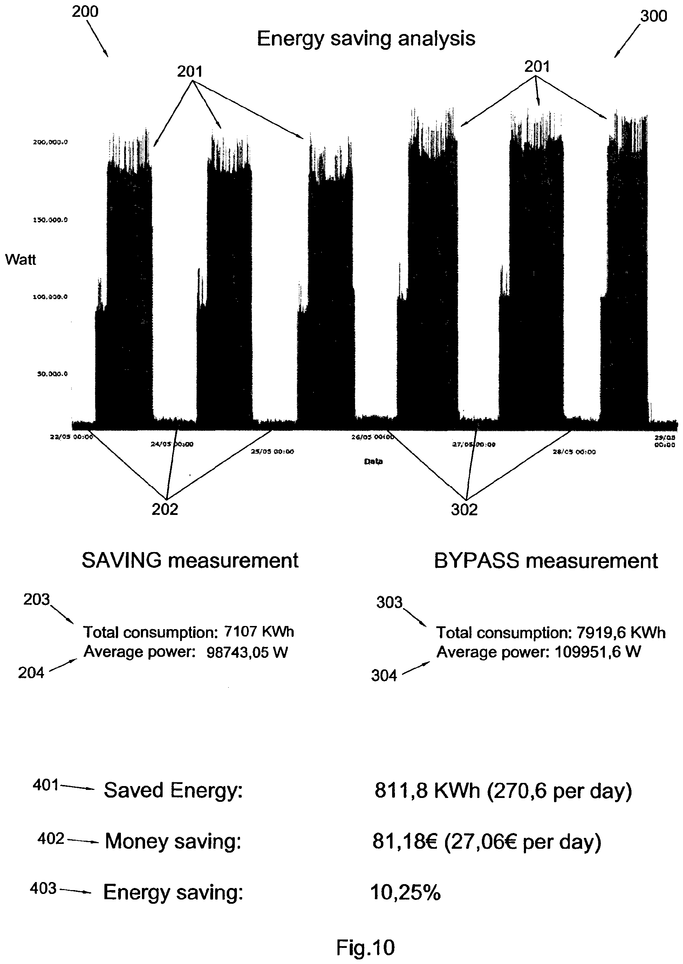

From experiments conducted by the applicant, as shown in the diagram in fig. 10, the use of the energy-saving device **1**, as shown in fig. 1, enables an energy saving of no less than 10% to be obtained by comparison with the use of the energy-saving devices according to the known state of the art.

In particular, these tests were conducted at a commercial complex covering approximately 6000 m² and lasted for six days, during three of which the energy-saving device **1** was enabled, while for the other three days said device **1** was bypassed.

The loads at the above-mentioned commercial complex consisted of approximately 8% for electronic equipment, 77% for lighting, 5% for escalators, and 10% for lifts.

From the two graphs **200** and **300** shown in fig. 10, where the graph on the left (**200**) represents the outcome of the test with the energy-saving device **1** enabled, while the one on the right (**300**) represents the outcome of the test with said device **1** bypassed, it is clear that in both cases the energy consumption has three peaks **201** and **301** during a 24-hour period coinciding with daytime hours and three troughs **202** and **302** relating to night-time hours, i.e. when the energy consumption is determined exclusively by electronic equipment operating around the clock.

Basically, from a comparison between the two graphs **200** and **300**, it is clear that the use of the three-phase transformer **10** coincided with a total consumption **203** of 7,107.8 kWh and a mean power absorbed **204** of 98,743.05 W, while during the days of measurements without said energy-saving device **1** enabled the total consumption **303** was 7,919.6 kWh and the mean power absorbed **304** was 109,951.6 W.

It can consequently be claimed that using the energy-saving device **1** achieved a saving **401** of 811.8 kWh altogether (270.6 kWh per day) with a consequent monetary saving **402** of approximately 81.18 Euro (27.06 Euro a day) based on the cost of energy in Italy.

Thus, as previously claimed, the percentage energy saving achieved **403**, in this particular case, was 10.25%.

Based on the above, it is clear that the energy-saving device **1** achieves all the previously-stated objects.

In particular, the invention achieves the object of producing an energy-saving device that is more efficient than the devices according to the known state of the art.

More in detail, the invention achieves the object of producing an energy-saving device capable of attenuating the harmonics contained in the signals of the electrical quantities involved.

In addition, the invention achieves the object of producing an energy-saving device capable of attenuating the distortions coming from the mains power supply.

Another object achieved by the invention is that it produces an energy-saving device capable of attenuating the inrush current peaks during the start-up phase, with the balancing of the energy transmission.

Another object achieved by the invention is that it produces an energy-saving device capable of attenuating the current peaks in the waveforms at the rated frequency.

Another object achieved by the invention is that it produces an energy-saving device capable of optimizing the control of the energy transmission.

In the executive phase, variants of the energy-saving device according to the invention may be developed and, even though they are not described herein, if they come within the scope of the following claims, they shall be deemed to be covered by the present patent.

Where technical characteristics are indicated in the following claims by means of reference signs, these have been added merely for the purpose of facilitating the reading of the claims and said reference signs shall consequently have no limiting effect on the protected scope of each element identified thereby for explanatory purposes.

## Claims

1. An energy-saving device (1) designed to be inserted between a three-phase power source (A) and a three-phase load (L), of the type comprising a three-phase electrical transformer (10), each phase of which comprises a transformation assembly (11) involving a primary winding (2) designed to be connected at a first end (5) to one phase of said power source (A) and electromagnetically coupled to a secondary winding (3) connected at its second end (S1) to a phase of said load (L), said first end (5) of each of said primary windings (2) being connected to the first end (SO) of the corresponding secondary winding (3), so as to define a common reference between said primary winding (2) and said secondary winding (3), **characterized in that**:
- the second ends (6) of said primary windings (2) in each of said transformation assemblies (11) lying opposite said first ends (5) are electrically connected to one another by first switching means (4);
- each of said secondary windings (3) is connected in parallel to second switching means (7) for enabling or disabling the operation of said energy-saving device (1) between said power source (A) and said load (L).

2. A device (1) according to claim 1), **characterized in that** said first switching means (4) comprise a remote control switch (41) with three contacts, each of which is associated with one of said transformation assemblies (11).

3. A device (1) according to any of the previous claims, **characterized in that** said second switching means (7) comprise an isolator (71) with three contacts, each of which is connected in parallel to a corresponding secondary winding (3) of each of said transformation assemblies (11).

4. Method for switching from the saving configuration to the bypass configuration of an energy-saving device according to any of the previous claims, **characterized in that** it comprises the following steps in sequence:
- switching the first switching means (4) to the "off" condition, opening the three contacts between the second ends (6) of the three primary windings (2);
- when said three contacts are open, switching the second switching means (7) to the "on" condition, short-circuiting each secondary winding (3).

5. Method for switching from the bypass configuration to the saving configuration of an energy-saving device according to any of the previous claims from 1 to 3, **characterized in that** it comprises the following steps in sequence:
- switching the second switching means (7) to the "off" condition, opening the contact placed in parallel with each secondary winding (3);
- when said three contacts are open, switching the first switching means (4) to the "on" condition, restoring the common connection between the second ends (6) of the three primary windings (2).

## Patentansprüche

1. Energiesparvorrichtung (1) zum Einbau zwischen einer dreiphasigen Stromquelle (A) und einer dreiphasigen Last (L) des Typs, der einen dreiphasigen elektrischen Transformator (10) umfasst, wobei jede Phase desselben eine Umwandlungseinheit (11) umfasst, die eine primäre Wicklung (2) aufweist, welche darauf ausgelegt ist, mit einem ersten Ende (5) an einer Phase der besagten Stromquelle (A) angeschlossen und elektromagnetisch mit einer sekundären Wicklung (3) gekoppelt zu werden, die mit ihrem zweiten Ende (S1) an einer Phase der besagten Last (L) angeschlossen ist, wobei das besagte erste Ende (5) jeder der besagten primären Wicklungen (2) mit dem ersten Ende (SO) der entsprechenden sekundären Wicklung (3) verbunden ist, so dass ein gemeinsamer Bezug zwischen der besagten primären Wicklung (2) und der besagten sekundären Wicklung (3) definiert wird, **dadurch gekennzeichnet, dass**:
- die zweiten Enden (6) der besagten primären Wicklungen (2) in jeder der besagten Umwandlungseinheiten (11), die den besagten ersten Enden (5) gegenüberliegen, durch erste Schaltmittel (4) elektrisch miteinander verbunden sind;
- jede der besagten sekundären Wicklungen (3) parallel mit zweiten Schaltmitteln (7) verbunden ist, um den Betrieb der besagten Energiesparvorrichtung (1) zwischen der besagten Stromquelle (A) und der besagten Last (L) ein- oder auszuschalten.

2. Vorrichtung (1) gemäß Patentanspruch 1), **dadurch gekennzeichnet, dass** die besagten ersten Schaltmittel (4) einen Fernschalter (41) mit drei Kontakten umfassen, von denen jeder einer der besagten Umwandlungseinheiten (11) zugeordnet ist.

3. Vorrichtung (1) gemäß eines jeden der vorstehenden Patentansprüche, **dadurch gekennzeichnet, dass** die besagten zweiten Schaltmittel (7) einen Trennschalter (71) mit drei Kontakten umfassen, von denen ein jeder parallel mit einer entsprechenden, sekundären Wicklung (3) jeder der besagten Umwandlungseinheiten (11) verbunden ist.

4. Verfahren zur Umschaltung einer Energiesparvorrichtung gemäß eines jeden der vorstehenden Patentansprüche aus der Sparkonfiguration in die Bypass-Konfiguration, **dadurch gekennzeichnet, dass** es folgende, nacheinander ablaufende Schritte umfasst:
- Umschalten der ersten Schaltmittel (4) in den "off"-Zustand durch Öffnen der drei Kontakte zwischen den zweiten Enden (6) der drei primären Wicklungen (2);
- wenn die besagten drei Kontakte geöffnet sind, Umschalten der zweiten Schaltmittel (7) in den "on"-Zustand unter Kurzschließen jeder sekundären Wicklung (3).

5. Verfahren zur Umschaltung einer Energiesparvorrichtung gemäß eines jeden der vorstehenden Patentansprüche von 1 bis 3 aus der Bypass-Konfiguration in die Sparkonfiguration, **dadurch gekennzeichnet, dass** es folgende, nacheinander ablaufende Schritte umfasst:
- Umschalten der zweiten Schaltmittel (7) in den "off"-Zustand durch Öffnen des parallel zu jeder sekundären Wicklung (3) befindlichen Kontakts;
- wenn die besagten drei Kontakte geöffnet sind, Umschalten der ersten Schaltmittel (4) in den "on"-Zustand unter Wiederherstellung der gemeinsamen Verbindung zwischen den zweiten Enden (6) der drei primären Wicklungen (2).

## Revendications

1. Dispositif d'économie d'énergie (1) apte à être inséré entre une source d'alimentation triphasée (A) et une charge triphasée (L), du type comprenant un transformateur électrique triphasé (10), chaque phase de celui-ci comprend un groupe de transformation (11) présentant un bobinage primaire (2) apte à être relié à hauteur d'une première extrémité (5) à une phase de ladite source d'alimentation (A) et relié de manière électromagnétique à un bobinage secondaire (3) relié à hauteur de sa deuxième extrémité (S1) à une phase de ladite charge (L), ladite première extrémité (5) de chacun desdits bobinages primaires (2) étant reliée à la première extrémité (SO) du bobinage secondaire correspondant (3), de manière à définir une référence commune entre ledit bobinage primaire (2) et ledit bobinage secondaire (3), **caractérisé en ce que**:
- les deuxièmes extrémités (6) dudit bobinage primaire (2) dans chacun desdits groupes de transformation (11) qui sont opposées auxdites premières extrémités (5) sont reliées électriquement l'une à l'autre par de premiers moyens de commutation (4);
- chacun desdits bobinages secondaires (3) est relié en parallèle à des deuxièmes moyens de commutation (7) pour activer ou désactiver le fonctionnement dudit dispositif d'économie d'énergie (1) entre ladite source d'alimentation (A) et ladite charge (L).

2. Dispositif (1) selon la revendication 1), **caractérisé en ce que** lesdits premiers moyens de commutation (4) comprennent un interrupteur à télécommande (41) à trois contacts, chacun desquels est associé à un desdits groupes de transformation (11).

3. Dispositif (1) selon l'une quelconque des revendications précédentes, **caractérisé en ce que** lesdits deuxièmes moyens de commutation (7) comprennent un isolateur (71) à trois contacts, chacun desquels est relié en parallèle à un bobinage secondaire correspondant (3) de chacun desdits groupes de transformation (11).

4. Méthode pour la commutation de la configuration d'économie d'énergie à la configuration de dérivation d'un dispositif d'économie d'énergie selon l'une quelconque des revendications précédentes, **caractérisée en ce qu'**elle comprend les phases suivantes en séquence:
- commutation des premiers moyens de commutation (4) dans la condition "off", en ouvrant les trois contacts entre les deuxièmes extrémités (6) des trois bobinages primaires (2);
- quand lesdits trois contacts sont ouverts, commutation des deuxièmes moyens de commutation (7) dans la condition "on", en court-circuitant chaque bobinage secondaire (3).

5. Méthode pour la commutation de la configuration de dérivation à la configuration d'économie d'énergie d'un dispositif d'économie d'énergie selon l'une quelconque des revendications précédentes de 1 à 3, **caractérisée en ce qu'**elle comprend les phases suivantes en séquence:
- commutation des deuxièmes moyens de commutation (7) dans la condition "off", en ouvrant le contact placé en parallèle avec chaque bobinage secondaire (3);
- quand lesdits trois contacts sont ouverts, commutation des premiers moyens de commutation (4) dans la condition "on", en rétablissant la connexion commune entre les deuxièmes extrémités (6) des trois bobinages primaires (2).
